Europäisches Patentamt

European Patent Office

Office européen des brevets

(19)

(11) Publication number: 0 368 531

A1

## (12) EUROPEAN PATENT APPLICATION

(21) Application number: 89311227.6

(22) Date of filing: 31.10.89

(51) Int. Cl.5: **F16H 21/14, F16H 25/04**

(30) Priority: 09.11.88 GB 8826212

(43) Date of publication of application:
16.05.90 Bulletin 90/20

(84) Designated Contracting States:
DE FR GB IT SE

(71) Applicant: JAGUAR CARS LIMITED
Browns Lane
Allesley Coventry CV5 9DR West
Midlands(GB)

(72) Inventor: Parsons, Bryan Nigel Victor
2 Church Street
Stoney Stanton Leicestershire(GB)

(74) Representative: Cundy, Anthony Brian et al
Anthony Cundy & Company 384 Station
Road Dorridge
Solihull West Midlands B93 8ES(GB)

(54) Mechanism for transmitting rotational motion from one shaft to another.

(57) A mechanism for transmitting a rotational motion from one shaft (10) to another shaft (11) includes a link (12) which is constrained to move in an orbital path, one of the shafts (10) being mounted perpendicular to the plane of the orbital path of the link (12) and being adapted to drive the link (12) about its orbital path, the other shaft (11) being mounted for rotation about an axis parallel to that of the shaft (10) and being connected to the link (12) by means of at least one pin (20 or 21 ) which extends parallel to the axis of said other shaft (11), said pin (20 or 21) engaging in a groove (25 or 26) extending parallel to the plane of the orbital path of the link (12).

FIG 1

EP 0 368 531 A1

# MECHANISM FOR TRANSMITTING ROTATIONAL MOTION FROM ONE SHAFT TO ANOTHER

This invention relates to a mechanism for transmitting rotational motion from one shaft to another.

UK Patent No. GB 2160612B discloses a mechanism for transmitting rotational motion from one shaft to another which is parallel to the first, comprising a link which is constrained to perform orbital motion, the shafts being connected to the link by cranks or by internal/external gear sets.

When cranks are used on both the input and output shafts, the cranks must have the same throw and consequently the drive ratio will be 1:1. Other drive ratios may be obtained by using gear sets between one or both shafts and the link. However, the inclusion of such gear sets adds significantly to the manufacturing time and cost of the mechanism.

There is is quite commonly, for example in cam shaft drive mechanisms, a need to provide a 2:1 reduction in transmission of drive from one shaft to another. The present invention provides a mechanism which will provide a 2:1 drive ratio between link and shaft, without the need for gear sets. Alternatively the present invention may provide a 1:1 reverse drive ratio between link and shaft.

According to one aspect of the present invention, a mechanism for transmitting a rotational motion from one shaft to another shaft comprises a link which is constrained to move in an orbital path, an input shaft mounted perpendicular to the plane of the orbital path of the link and being connected to the link so that rotation of the input shaft will cause the link to move in its orbital path, and an output shaft mounted parallel to said input shaft, said output shaft being connected to the link so that orbital motion of the link will cause the output shaft to rotate; characterised in that one of the shafts is connected to the link by means of a pin which extends parallel to the axis of the shaft, said pin engaging in a groove extending parallel to the plane of the orbital path of the link.

According to a preferred embodiment of the invention the pin is mounted on the link and the groove is provided diametrically in the radial end face of the shaft. The pin is positioned on the link so that upon orbital motion of the link the pin will move in a circular path which passes through the axis of rotation of the shaft. In this manner if the link drives the shaft, movement of the pin in the groove will provide a 2:1 reduction in dirve. Conversely if the shaft drives the link there will be a 2:1 increase in drive. The torque transmitted between the pin and groove will depend upon the angle between the direction of movement of the pin and the axis of the groove and consequently will reduce to zero as the pin approaches the axis of rotation of the output shaft. A uniform distribution of torque transfer may be achieved by the use of a plurality of pins, each pin moving with the link in a circular path which at one point coincides with the axis of rotation of the output shaft and being located in a separate diametrical groove in the radial end face of the output shaft. In this manner, when the torque transfer between one pin and its associated groove is at a minimum, the torque transfer between another pin and its associated groove may be at a maximum and a uniform torque transfer throughout the operating cycle may be achieved.

According to an alternative embodiment a pair of pins are provided on the shaft and a pair of corresponding intersecting grooves on the link. The pins are mounted diametrically on the end face of the shaft, at a radius corresponding to the radius of the circular path proscribed by the intersection of the grooves as the link moves in its orbital path, the circular path of the intersection of the grooves being concentric with the axis of the shaft. With this embodiment relative motion between the pins and grooves will transmit drive between the link and shaft with a ratio 1:1 but reversing the direction of drive. As with the previous embodiment more than two pins may be provided on the shaft each locating in a separate groove in the link.

An embodiment of the invention is now described, by way of example only, with reference to the accompanying drawings in which:-

Figure 1 illustrates in end elevation, a drive mechanism in accordance with the present invention;

Figure 2 shows a sectional side elevation along the line II-II of Figure 1;

Figures 3 to 6 illustrate the sequential progression of the output shaft for one rotation of the input shaft of the mechanism illustrated in Figures 1 and 2;

Figure 7 illustrates in partial end elevation an alternative drive mechanism in accordance with the present invention;

Figure 8 shows a sectional side elevation along the line VIII-VIII of Figure 7;

Figures 9 to 12 illustrate the sequential progression of the output shaft for one rotation of the input shaft of the mechanism illustrated in Figures 7 and 8; and

Figure 13 illustrates in end elevation a modification to the drive mechanism illustrated in Figure 1.

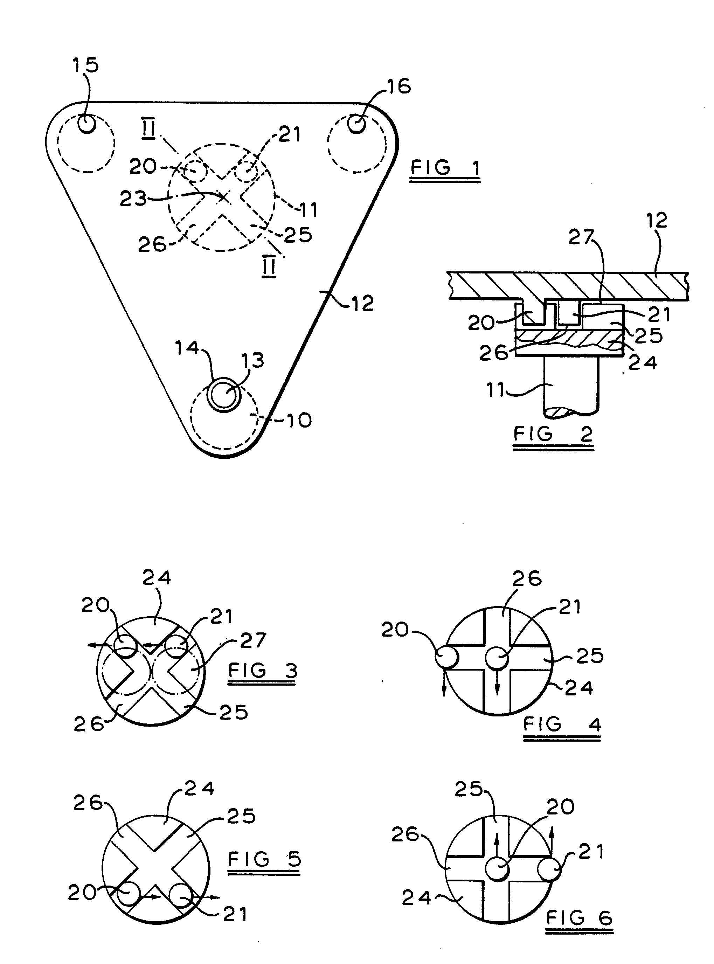

Figures 1 and 2 illustrate a mechanism for connecting the crank shaft 10 of an internal combustion engine to a cam shaft 11.

Crank shaft 10 is connected to a link 12 by means of a crank 13, which engages in a bearing 14 in the link 12. A pair of idler cranks 15 and 16 of equal throw to the crank 13 and mounted for rotation about axis parallel to the axis of rotation of the crank shaft 10, are mounted at opposite corners of the link 12, in order to constrain the link 12 so that it will move in an orbital path when driven by the crank shaft 10.

A pair of pins 20 and 21 are mounted on the link 12, the pins being positioned such that when the link 12 is driven the circular paths prescribed by the pins 20 and 21 will coincide tangentially.

The cam shaft 11 is mounted for rotation about an axis parallel to the axis of rotation of the crank shaft 10, said axis passing through the point 23 at which the circular paths prescribed by pins 20 and 21 coincide. The crank shaft 11 has a flange formation 24 at the end adjacent link 12. A pair of diametric grooves 25 and 26, one at right angles to the other, are provided in the radial end face 27 of the flange formation 24 and the pins 20 and 21 engage one in each of the grooves 25 and 26.

Upon rotation of the crank shaft 10, the link 12 is driven in an orbital path causing the pins 20 and 21 to move in circular paths. Engagement of the pins 20 and 21 in grooves 25 and 26 respectively, will cause the cam shaft 11 to rotate. As illustrated in Figures 3 to 6, as the pins 20 and 21 rotate, they move up and down the grooves 25 and 26, the cam shaft 11 rotating half a revolution for every full revolution of the crank shaft 10.

It will be appreciated, that when pins 20 and 21 are located centrally of the grooves 25 and 26 respectively, the direction of motion of the pin 20, 21 (as indicated by the arrows in Figures 3 to 6) will be substantially parallel to the groove and consequently, the torque transmission will be substantially zero. However, at this point the other pin 21, 20 is moving substantially perpendicular to its associated groove 26, 25 and consequently torque transmission therebetween will be at a maximum. Consequently, the combination of reaction forces between pins 20 and 21 and grooves 25 and 26 respectively will provide a substantially uniform torque transmission from link 12 to cam shaft 11 throughout the rotation of the crank shaft 10.

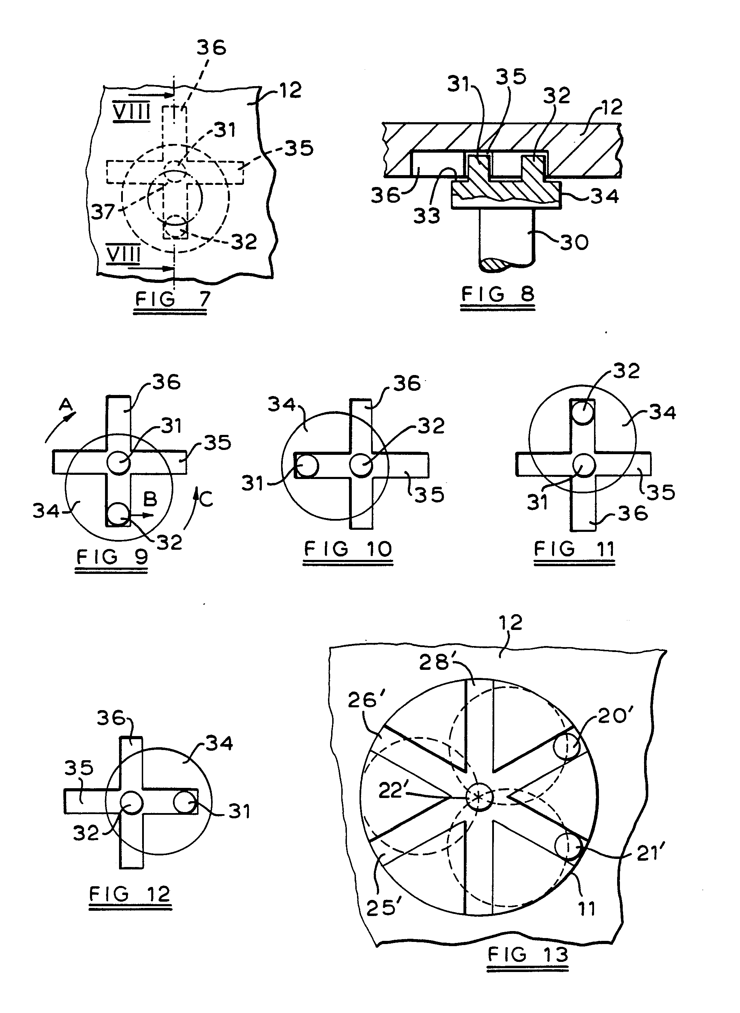

In the embodiment illustrated in Figures 7 and 8 a link 12 is constrained to move in an orbital path and is driven by an input shaft, in similar manner to the mechanism illustrated in Figures 1 and 2.

The link 12 is coupled to an output shaft 30 by means of a pair of pins 31 and 32 which are mounted diametrically on the end face 33 of a flange formation 34 on shaft 30. The pins 31 and 32 engage each in one of a pair of perpendicular intersecting grooves 35 and 36 respectively which are provided in the opposed face of the link 12.

The grooves 35 and 36 are positioned so that the intersection 37 therebetween proscribes a circular path as the link 12 moves about its orbital path, said circular path being concentric with the axis of rotation of shaft 30. The pins 31 and 32 are mounted on a radius equal to the radius of the circular path of the intersection of grooves 35 and 36.

As illustrated in Figures 9 to 12, as the link 12 is driven about its orbital path by the input shaft, movement of the grooves 35 and 36 causes the pins 31 and 32 to be driven in the opposite direction at a drive ratio of 1:1. For example at the position illustrated in Figure 9, if the intersection 37 of the grooves 35 and 36 is moving in the direction of arrow A, reaction between groove 36 and pin 32 will move it in the direction of arrow B thus causing the shaft 30 to rotate in the direction of arrow C, pin 31 being free to move back along groove 35.

In the modification illustrated in Figure 13, three pins 20$'$, 21$'$ and 22$'$ are mounted on the link 12. The pins 20$'$, 21$'$ and 22$'$ ar e positioned equidistant of one another, such that the circular paths (shown in broken line) taken by the pins when the link 12 is driven in its orbital path, will intersect at a point co-axial with the axis of the cam shaft 11.

Three corresponding diametric grooves 25$'$, 26$'$ and 28$'$ are provided in the end of the cam shaft 11, in similar manner to that described with reference to Figures 1 to 6. The grooves 25$'$, 26$'$ and 28$'$ are evenly spaced at 60° to one another.

With this embodiment, rotation of the crank shaft 10 will be transmitted via link 12, pins 20$'$, 21$'$ and 22$'$ and grooves 25$'$, 26$'$ and 28$'$ to the cam shaft 11 to provide a two to one reduction in drive, in similar manner to that described with reference to Figures 1 to 6. However, with this embodiment whenever any one of the pins 20$'$, 21$'$ or 22$'$ are located at the intersection of grooves 25$'$, 26$'$ and 28$'$ and contributes nothing to the torque transmission, the other two pins 20$'$, 21$'$ or 22$'$ will react substantially perpendicularly against the associated grooves 25$'$, 26$'$ or 28$'$ and consequently torque transmission therebetween will approach a maximum. As a consequence this embodiment will be capable of transmitting higher torques than the embodiment illustrated in Figures 1 to 6.

In accordance with the present invention still further pins and corresponding grooves may be provided. Alternatively the drive disclosed with reference to Figures 7 to 12 may be modified by the addition of further pins on the cam shaft 30 and additional corresponding grooves on the link 12.

Various modifications may be made without departing from the invention. For example in order to improve guidance of the pins in grooves, particularly where the grooves intersect, the pins may pivotally locate in sliders which are slidingly located in the grooves. Alternatively, the pins may be in the form of rollers thereby reducing frictional loads and wear on the grooves.

The link 12 of the embodiments disclosed above may be used to transmit drive from one input shaft to any number of output shafts. It will also be appreciated that the pin and groove mechanisms disclosed above can be used to transmit drive from the input shaft to the link. Consequently any one or more of the shafts may be coupled to the link using such pin and groove mechanisms. Other shafts may be coupled to the link by, for example, cranks or gear sets.

Instead of using idler cranks 15, 16 to constrain link 12 to move in an orbital path, other means, for example an Oldham linkage, may be used for this purpose.

## Claims

1. A mechanism for transmitting a rotational motion from one shaft (10) to another shaft (11; 30) comprising a link (12) which is constrained to move in an orbital path, an input shaft (10) mounted perpendicular to the plane of the orbital path oi the link (12) and being connected to the link (12) so that rotation of the input shaft (10) will cause the link (12) to move in its orbital path, and an output shaft (11; 30) mounted parallel to said input shaft (10), said output shaft (11; 30) being connected to the link (12) so that orbital motion of the link (12) will cause the output shaft (11; 30) to rotate; characterised in that one of the shafts (10; 11; 10, 30) is connected to the link (12) by means of a pin (20, 21; 31, 32; 20$'$, 21$'$, 22$'$) which extends parallel to the axis of the shaft (11; 30), said pin (20, 21; 31, 32; 20$'$, 21$'$, 22$'$) engaging in a groove (25, 26; 35, 36; 25$'$, 26$'$, 28$'$) extending parallel to the plane of the orbital path of the link (12).

2. A mechanism according to Claim 1 characterised in that the pin (20, 21; 20$'$, 21$'$, 22$'$) is mounted on the link (12) and the groove (25, 26; 25$'$, 26$'$, 28$'$) is provided diametrically in a radial end face of the shaft (11), the pin (20, 21; 20$'$, 21$'$, 22$'$) being positioned on the link (12) so that upon orbital motion of the link (12) the pin (20, 21; 20$'$, 21$'$, 22$'$) will move in a circular path which passes through the axis of rotation of the shaft (11).

3. A mechanism according to Claim 2 characterised in that a plurality of pins (20, 21; 20$'$, 21$'$, 22$'$) are provided on tle link (12), each pin (20, 21; 20$'$, 21$'$, 22') being driven in a circular path which at one point coincides with the axis of rotation of the output shaft (11) and engaging in a separate slot (25, 26; 25$'$, 26$'$, 28$'$) in the radial end face of the output shaft (11).

4. A mechanism according to Claim 3 characterised in that a pair of pins (20, 21) are provided on the link (12), said pins (20, 21) being positioned such that their circular paths coincide tangentially, the pins (20, 21) engaging in separate diametric grooves (25, 26) in the radial end (27) face of the output shaft (11), one groove (25) being at right angles to the other groove (26).

5. A mechanism according to Claim 1 characterised in that a plurality of pins (31, 32) are provided on the shaft (30) each pin (31, 32) engaging in a corresponding groove (35, 36) on the link (12) the grooves (35, 36) intersecting at a common point (37).

6. A mechanism according to Claim 5 characterised in that two pins (31, 32) are mounted diametrically on the end face of the shaft (30) at a radius equal to the radius of the circular path proscribed by the intersection (37) of the grooves (35, 36) as the link (12) moves in its orbital path, the circular path proscribed by the intersection (37) of the grooves (35, 36) being concentric with the axis of the shaft (30).

FIG 1

FIG 2

FIG 3

FIG 4

FIG 5

FIG 6

FIG 7

FIG 8

FIG 9

FIG 10

FIG 11

FIG 12

FIG 13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-294394 (CHARLES DAY)<br>* the whole document * | 1, 2, 4 | F16H21/14<br>F16H25/04 |
| Y | | 3 | |
| | --- | | |
| X | FR-A-573816 (P.ISAAC)<br>* the whole document * | 1, 5, 6 | |
| | --- | | |
| Y | ANTRIEBSTECHNIK.<br>vol. 4, no. 4, 1965, MAINZ DE<br>pages 123 - 125; Altenberg:<br>"Elastische Übersetzungs-Kupplung, ein neues Antriebselement"<br>* the whole document * | 3 | |
| A | | 1, 2,<br>4-7 | |
| | --- | | |
| D,A | GB-A-2160612 (JAGUAR)<br>* the whole document * | 1-7 | |
| | --- | | |

TECHNICAL FIELDS
SEARCHED (Int. Cl.5 )

F16H

The present search report has been drawn up for all claims

| Place of search | Date of completion of the search | Examiner |
|---|---|---|
| THE HAGUE | 15 MARCH 1990 | TOPP-BORN S. |